# EUROPEAN PATENT APPLICATION

(11) **EP 4 080 491 A1**
(43) Date of publication of application: **26.10.2022**
(21) Application number: 20901196.4
(22) Date of filing: 26.10.2020
(51) Int. Cl.: G09F 9/30, G06F 1/16

(54) **FOLDING SCREEN AND FOLDING DISPLAY TERMINAL**

(30) Priority: 19.12.2019 CN 201911319565
(71) Applicant: ZTE Corporation, Shenzhen, Guangdong 518057 (CN)
(72) Inventor: MA, Chengguang, Shenzhen, Guangdong 518057 (CN)
(74) Representative: Aipex B.V.
(86) International application number: PCT/CN2020/123639
(87) International publication number: WO 2021/120849

(57) **Abstract**

Provided are a foldable screen and a foldable display terminal. The foldable screen includes a flexible display screen (1), a first foldable body (21), a second foldable body (22), a rotation shaft (3) and a slidable mechanism (4). The first foldable body (21) and the second foldable body (22) are configured to support the flexible display screen (1). The rotation shaft (3) is disposed between the first foldable body (21) and the second foldable body (22) and configured to enable the first foldable body (21) and the second foldable body (22) to rotate relative to each other. The slidable mechanism (4) is disposed on at least one of the first foldable body (21) or the second foldable body (22) and configured to enable the flexible display screen (1) to slide relative to the first foldable body (21) and the second foldable body (22) when the first foldable body (21) rotates relative to the second foldable body (22).

## Description

This application claims priority to Chinese Patent Application No. 201911319565.5 filed with the China National Intellectual Property Administration (CNIPA) on Dec. 19, 2019, the disclosure of which is incorporated herein by reference in its entirety.

### TECHNICAL FIELD

The present application relates to the field of display screens, for example, a foldable screen and a foldable display terminal.

### BACKGROUND

With the increasing demands of users for terminal products having a large display screen, screens of terminal products become larger and larger, but the large-sized terminal products having a large screen are not convenient for users to carry. As foldable screens appear, the preceding problem is well solved.

The mainstream folding modes of foldable screens include screen inward folding and screen outward folding. Different folding modes have different technical implementation difficulties. The screen inward folding needs to solve the problems of a bending fillet of a screen and deformation of the screen after the screen is folded. The main difficulty of the screen outward folding is that a foldable body has different side lengths in the folded state and the unfolded state. For this reason, most foldable screens switch between side lengths by a designed hinged rotation shaft. That is, when the length of the outer curved surface screen remains unchanged, a smooth switch between the folded state and the unfolded state can be implemented by changes in the length of the inner curved surface structure. However, this hinged rotation shaft is quite complex in structure, can hardly pass the lifetime test and has a quite long development cycle. Moreover, under the influence of the turning radius of the hinged rotation shaft, a large gap exists between two foldable half cases after the two foldable half cases are folded.

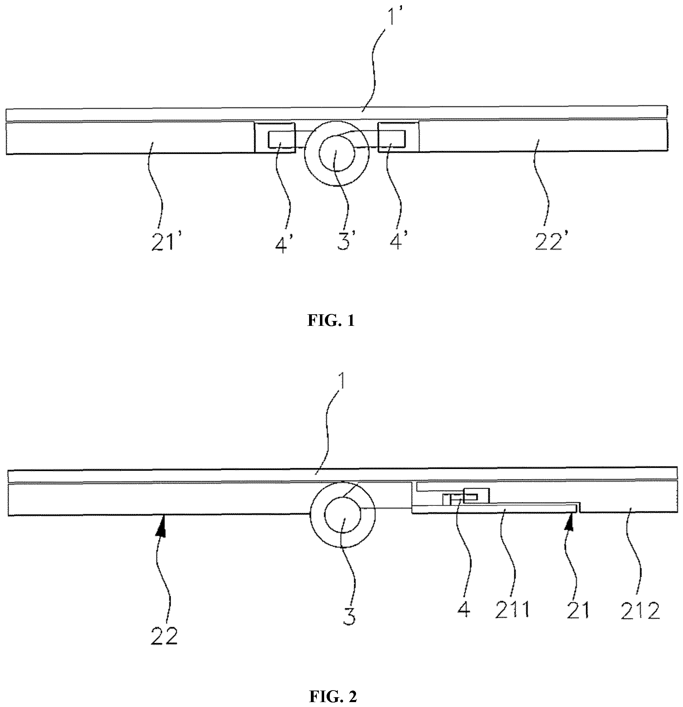

Additionally, there is a scheme in which the outward folding of a foldable screen can be implemented by rotation and slide. As shown in FIG. 1, the scheme includes a flexible display screen 1', a first foldable body 21', a second foldable body 22', a rotation shaft 3' and a slidable shaft 4'. The first foldable body 21' and the second foldable body 22' are configured to support the flexible display screen 1'. The first foldable body 21' and the second foldable body 22' are rotatably connected to each other through the rotation shaft 3' to enable the flexible display screen 1' to fold and unfold. Meanwhile, the first foldable body 21' and the second foldable body 22' are connected to the rotation shaft 3' through the slidable shaft 4' to enable the first foldable body 21' to slide relative to the second foldable body 22'. However, in this scheme, the rotation shaft and the slidable shaft are combined into one part that is disposed in the foldable region of the foldable screen. This part is quite complex in structure, is difficult to implement and has a higher cost. Moreover, in the preceding scheme, there is a large opening in the rotation shaft region when the foldable screen is in the unfolded state, affecting the aesthetics of the product. Meanwhile, in the unfolded state, the foldable bodies inadequately support the flexible display screen, and thus it is difficult for the product to pass the lifetime test due to such strength of the product.

### SUMMARY

The present application provides a foldable screen and a foldable display terminal to make the foldable screen simple in structure, easy in implementation, high in strength and aesthetic in appearance.

The provided foldable screen includes a flexible display screen, a first foldable body, a second foldable body, a rotation shaft and a slidable mechanism. The first foldable body and the second foldable body are configured to support the flexible display screen. The rotation shaft is disposed between the first foldable body and the second foldable body and configured to enable the first foldable body and the second foldable body to rotate relative to each other. The slidable mechanism is disposed on the first foldable body and/or one the second foldable body and configured to enable the flexible display screen to slide relative to the first foldable body and the second foldable body when the first foldable body rotates relative to the second foldable body.

The provided foldable display terminal includes the preceding foldable screen.

### BRIEF DESCRIPTION OF DRAWINGS

FIG. 1 is a front view of a foldable screen.
FIG. 2 is a front view of a foldable screen according to embodiments of the present application.
FIG. 3 is a view illustrating the structure of a foldable screen in an unfolded state according to embodiments of the present application.
FIG. 4 is a view illustrating the structure of a foldable screen in a folded state according to embodiments of the present application.
FIG. 5 is a view illustrating the structure of a foldable screen in a folding process according to embodiments of the present application.
FIG. 6 is a view illustrating the structure of a foldable screen excluding a flexible display screen according to embodiments of the present application.
FIG. 7 is a view illustrating the structure of a first foldable body of a foldable screen according to embodiments of the present application.
FIG. 8 is a view illustrating the structure of a slidable mechanism of a foldable screen according to embodiments of the present application.
FIG. 9 is an exploded view of a slidable mechanism of a foldable screen according to embodiments of the present application.
FIG. 10 is a view illustrating the structure of a slidable shaft of a foldable screen according to embodiments of the present application.
FIG. 11 is a view illustrating the structure of a slide seat of a foldable screen according to embodiments of the present application.
FIG. 12 is a view illustrating the structure of a rotation shaft of a foldable screen according to embodiments of the present application.
FIG. 13 is an exploded view of a rotation shaft of a foldable screen according to embodiments of the present application.
FIG. 14 is a view illustrating the structure of a concave teeth member of a foldable screen according to embodiments of the present application.
FIG. 15 is a view illustrating the structure of a convex teeth member of a foldable screen according to embodiments of the present application.
FIG. 16 is a view illustrating the structure of a foldable screen having a locking mechanism according to embodiments of the present application.
FIG. 17 is a view illustrating the structure of a foldable screen for an inward foldable screen according to embodiments of the present application.
FIG. 18 is a view illustrating the structure of a foldable screen for a double foldable screen according to embodiments of the present application.
FIG. 19 is a view illustrating the structure of another foldable screen for a double foldable screen according to embodiments of the present application.
FIG. 20 is a view illustrating the structure of a foldable screen having a roller and a rolling groove according to embodiments of the present application.
FIG. 21 is a view illustrating the structure of a roller and a rolling groove according to embodiments of the present application.
FIG. 22 is a view illustrating the structure of a foldable screen having a screen retractable space according to embodiments of the present application.
FIG. 23 is a view illustrating the structure of another foldable screen having a screen retractable space according to embodiments of the present application.

### Reference list

- 1': flexible display screen
- 21': first foldable body
- 22': second foldable body
- 3': rotation shaft
- 4': slidable shaft
- 1: flexible display screen
- 21: first foldable body
- 211: fixed member
- 212: slidable member
- 22: second foldable body
- 23: third foldable body
- 3: rotation shaft
- 31: male teeth member
- 311: male tooth
- 32: concave teeth member
- 321: concave tooth
- 33: fixed shaft
- 34: fixed sleeve
- 35: push spring
- 36: circlip
- 4: slidable mechanism
- 41: slide seat
- 411: sliding groove
- 412: second sliding groove
- 42: slidable shaft
- 421: first sliding groove
- 43: resilient member
- 44: first push lever
- 45: second push lever
- 46: first rivet shaft
- 47: second rivet shaft
- 48: slot
- 49: resilient engagement member
- 51: roller
- 52: rolling groove
- 6: deformable pad
- 7: locking mechanism
- 8: screen retractable space

### DETAILED DESCRIPTION

The present application is described below in conjunction with drawings and embodiments.

In the description of the present application, unless otherwise expressly specified and limited, the term "connected to each other", "connected" or "fixed" is to be construed in a broad sense, for example, as permanently connected, detachably connected, or integrated; mechanically connected or electrically connected; directly connected to each other or indirectly connected to each other through an intermediary; or internally connected or interactional between two components. The meanings of the preceding terms in the present application may be understood according to situations.

In the present application, unless otherwise expressly specified and limited, when a first feature is described as "above" or "below" a second feature, the first feature and the second feature may be in direct contact, or be in contact through another feature between the two features. Moreover, when the first feature is described as "on", "above" or "over" the second feature, the first feature is right on or obliquely on the second feature, or the first feature is simply at a horizontally higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of the present application, it is to be understood that the orientation or position relationships indicated by terms "above", "below", "left" "right" and the like are based on the orientation or position relationships shown in the drawings, merely for facilitating description of the present application and simplifying operation, and these relationships do not indicate or imply that the referred device or element has a specific orientation and is constructed and operated in a specific orientation, and thus it is not to be construed as limiting the present application. Additionally, the terms "first" and "second" in the specification are only used for descriptive purposes and have no special meanings.

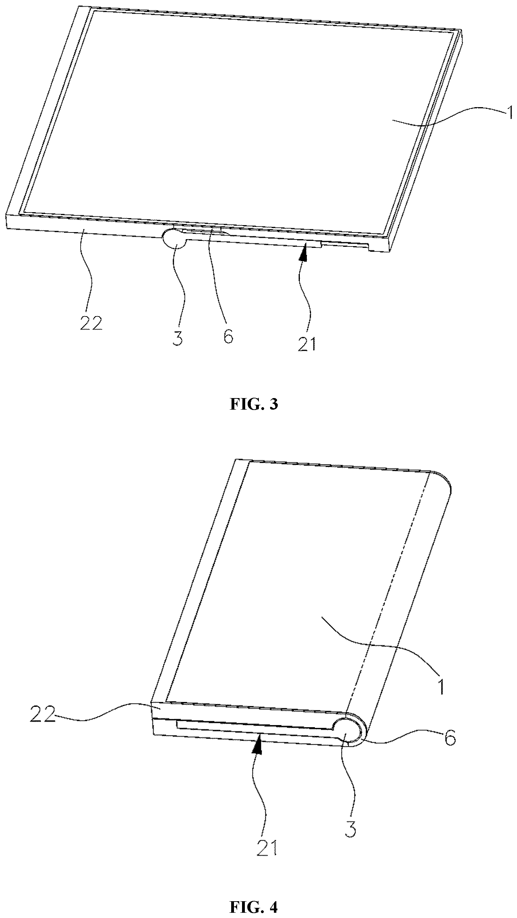

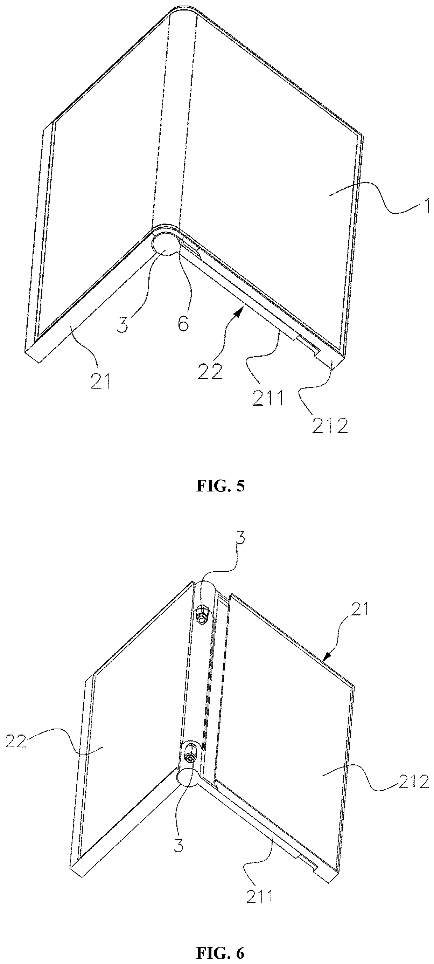

FIG. 2 is a front view of a foldable screen according to embodiments of the present application. FIG. 3 is a view illustrating the structure of a foldable screen in an unfolded state according to embodiments of the present application. FIG. 4 is a view illustrating the structure of a foldable screen in a folded state according to embodiments of the present application. FIG. 5 is a view illustrating the structure of a foldable screen in a folding process according to embodiments of the present application. FIG. 6 is a view illustrating the structure of a foldable screen excluding a flexible display screen according to embodiments of the present application. Referring to FIGS. 2 to 6, this embodiment of the present application provides a foldable screen including a flexible display screen 1, a first foldable body 21, a second foldable body 22, a rotation shaft 3 and a slidable mechanism 4. The first foldable body 21 and the second foldable body 22 are configured to support and protect the flexible display screen 1. The rotation shaft 3 is disposed between the first foldable body 21 and the second foldable 22 and configured to enable the first foldable body 21 and the second foldable body 22 to rotate relative to each other. The slidable mechanism 4 is disposed on the first foldable body 21 and configured to enable the flexible display screen 1 to slide relative to the first foldable body 21 when the first foldable body 21 rotates relative to the second foldable body 22 to adapt to changes in the outer side lengths of the first foldable body 21 and the second foldable body 22 in the folded state and the unfolded state.

The foldable screen according to this embodiment of the present application is implemented by rotation and slide, is simple in structure and has a long retractable lifetime. In this embodiment of the present application, the separation between the rotation shaft 3 and the slidable mechanism 4 simplifies the rotation shaft 3, thus simplifying the overall structure of the foldable screen and making the foldable screen easier in manufacturing and lower in cost; the slidable mechanism 4 is disposed on the first foldable body 21 instead of the rotation shaft 3 so that the gap in the rotation shaft 3 can be reduced, enabling better support of the foldable region of the flexible display screen 1 and improving the structure strength of the foldable screen; and, moreover, in the folded state, the foldable screen can attach the first foldable body 21 to the second foldable body 22 as far as possible so that the seam between the first foldable body 21 and the second foldable body 22 can be greatly reduced, ameliorating the aesthetic of the foldable screen.

Referring to FIGS. 2 to 6, in this embodiment of the present application, the first foldable body 21 includes a fixed member 211 and a slidable member 212. The fixed member 211 is securely connected to the rotation shaft 3. The slidable member 212 is securely connected to the non-foldable region of the flexible display screen 1. The slidable member 212 and the fixed member 211 are connected through the slidable mechanism 4. In this embodiment of the present application, one side of the flexible display screen 1 is securely connected to the second foldable body 22, and the other side of the flexible display screen 1 is securely connected to the slidable member 212, so when the slidable member 212 slides relative to the fixed member 211 through the slidable mechanism 4, the flexible display screen 1 can be driven to slide synchronously. In this manner, in the process of unfolding the foldable screen, when the fixed member 211 drives the flexible display screen 1 to rotate, the slidable member 212 synchronously drives the flexible display screen 1 to slide relative to the fixed member 211 in the direction away from the rotation shaft 3 so that the compatibility of outer side length differences of the flexible display screen from the folded state to the unfolded state can be implemented.

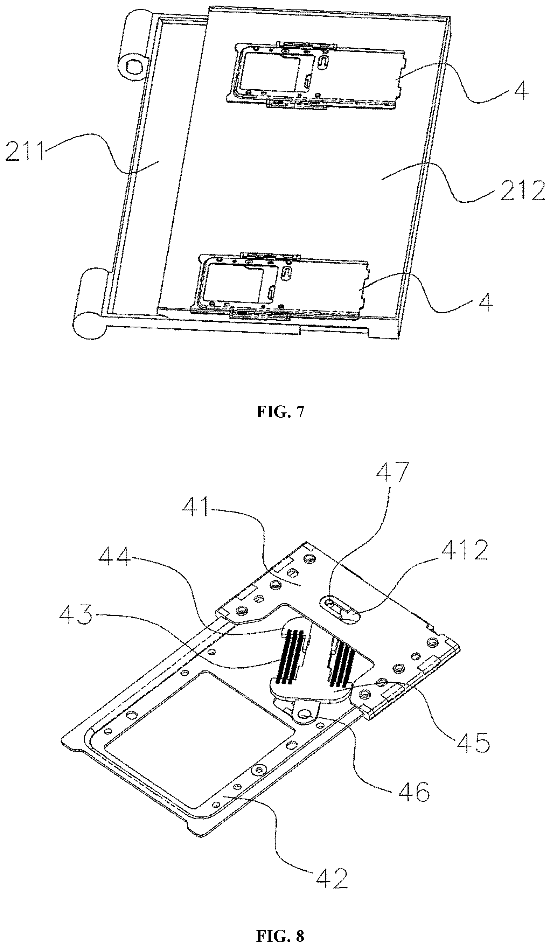

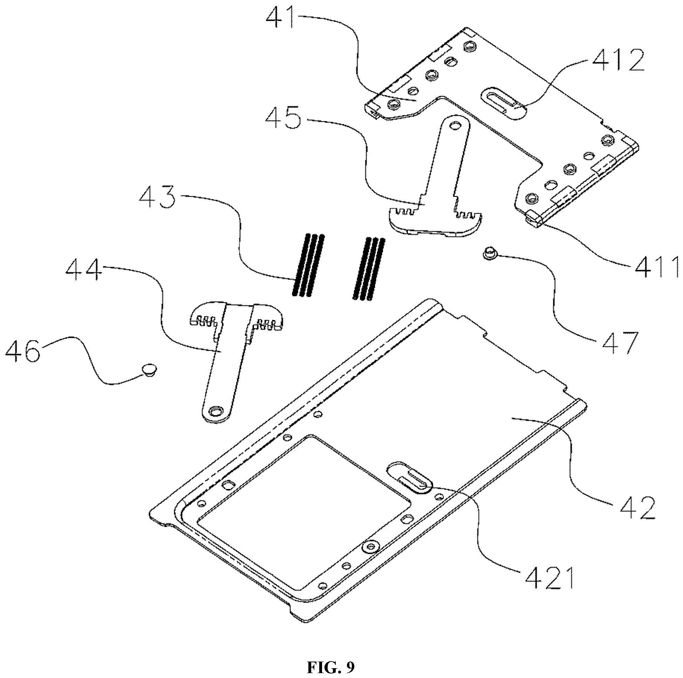

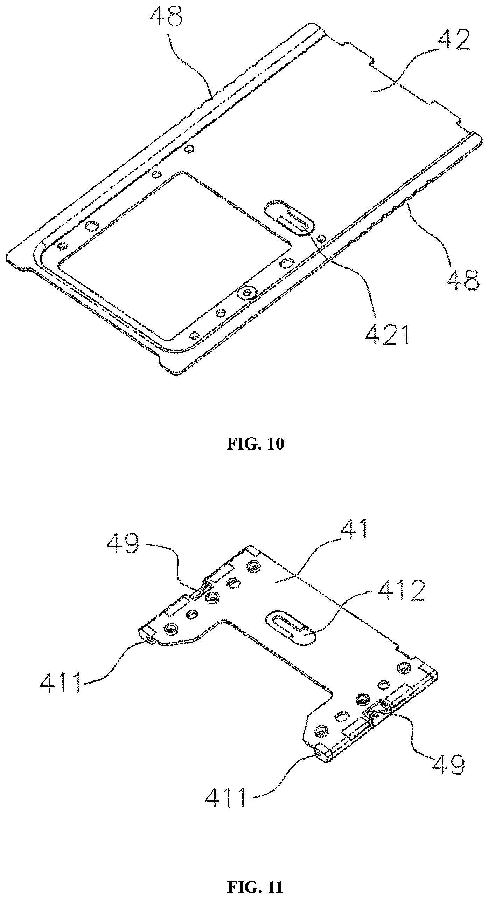

FIG. 7 is a view illustrating the structure of a first foldable body of a foldable screen according to embodiments of the present application. FIG. 8 is a view illustrating the structure of a slidable mechanism of a foldable screen according to embodiments of the present application. FIG. 9 is an exploded view of a slidable mechanism of a foldable screen according to embodiments of the present application. FIG. 10 is a view illustrating the structure of a slidable shaft of a foldable screen according to embodiments of the present application. FIG. 11 is a view illustrating the structure of a slide seat of a foldable screen according to embodiments of the present application.

Referring to FIGS. 7 to 11, in this embodiment of the present application, the slidable mechanism 4 includes a slidable shaft 42 and a slide seat 41. The slidable shaft 42 is securely connected to the slidable member 212. The slide seat 41 is securely connected to the fixed member 211. In this embodiment of the present application, the slidable shaft 42 is a sheet-shaped structure whose two opposite sides may serve as guideways. Two opposite sides of the slide seat 41 are each provided with a sliding groove 411. The slidable shaft 42 can be slidably installed inside the sliding grooves 411 of the slide seat 41 through the guideways. In this manner, when sliding relative to the slide seat 41, the slidable shaft 42 can drive the slidable member 212 to slide relative to the fixed member 211. The structure is simple, and the slide is smooth.

There is no internal drive force when a foldable screen in the related art is switched from the folded state to the unfolded state. Solely relying on the manual opening and closing of a user may cause inconvenience and cannot ensure the stable folding of the foldable screen. To solve the preceding problem, in this embodiment of the present application, the slidable mechanism 4 further includes a resilient mechanism. The resilient mechanism is configured to pull the slidable shaft 42 to drive the slidable shaft move relative to the slide seat 41 to drive the slidable member 212 to slide relative to the fixed member 211, causing the foldable screen to have a trend of being unfolded. In this embodiment of the present application, the internal drive force is provided for unfolding the foldable screen through the internal continuous resilient force of the resilient mechanism so that the foldable screen is unfolded more easily, improving the operation convenience.

Referring to FIGS. 8 and 9, in this embodiment of the present application, the resilient mechanism includes a first push lever 44 and a second push lever 45 that are in sliding fit, and a resilient member 43. One end of the first push lever 44 is slidably connected to the slidable shaft 42. One end of the second push lever 45 is slidably connected to the slide seat 41. The resilient member 43 is connected between the first push lever 44 and the second push lever 45. The slidable shaft 42 is provided with a first sliding groove 421. The slide seat 41 is provided with a second sliding groove 412. The first sliding groove 421 and the second sliding groove 412 are both perpendicular to the sliding direction of the slidable shaft 42. One end of the first push lever 44 is slidably connected to the first sliding groove 421 through a first rivet shaft 46. One end of the second push lever 45 is slidably connected to the second sliding groove 412 through a second rivet shaft 47. In this embodiment of the present application, while the slidable shaft 42 is sliding relative to the slide seat 41, the first push lever 44 and the second push lever 45 can move towards or away from each other so that the resilient member 43 can be compressed or stretched. Therefore, the internal drive force can be provided for unfolding the foldable screen by the resilient member 43 endowed with an internal push force or an internal pull force so that the foldable screen can be unfolded more easily. In this embodiment of the present application, the resilient member 43 is a compression spring capable of providing the internal push force so that the slidable shaft 42 can drive the slidable member 212 to slide in the direction away from the rotation shaft 3, causing the foldable screen to have a trend of being unfolded.

To keep the foldable screen stably in the folded state, in this embodiment of the present application, the foldable screen further includes a damping mechanism. The damping mechanism is disposed on the rotation shaft 3 and/or the slidable mechanism 4 and configured to provide the halt damping force for unfolding the foldable screen, and the halt damping force is greater than the resilient force provided by the resilient mechanism. In this manner, the foldable screen can be easily unfolded under the action of an external force and can be stably kept in the folded state at an angle without the external force. In this embodiment of the present application, the damping mechanism includes a slidable damping mechanism disposed in the slidable mechanism 4. The slidable damping mechanism is configured to provide the sliding halt damping force for sliding the slidable member 212, and the sliding halt damping force is greater than the resilient force provided by the resilient mechanism. In this embodiment of the present application, the slidable damping mechanism includes at least one slot 48 disposed on one of the slidable shaft 42 or the slide seat 41 and at least one resilient engagement member 49 disposed on the other one of the rotation shaft 42 or the slide seat 42. The at least one slot 48 fits with the at least one resilient engagement member 49 to provide limiting damping. The resilient engagement member 49 may be a resilient snap. Exemplarily, referring to FIGS. 10 and 11, in this embodiment of the present application, the slidable shaft 42 is provided with multiple slots 48, and the slide seat 41 is provided with one resilient snap. The slot 48 corresponds to the resilient snap in shape. The halt effects of the foldable screen at multiple different folding positions can be implemented through the limiting damping action of different slots 48 on the resilient snap. The preceding fitting form of the resilient snap and the slot 48 is only one enumerated implementation. In fact, in the present application, the slidable mechanism having a damping function may be implemented through many forms, for example, through a slot and a spring ball structure. Therefore, as long as it is a slidable mechanism having a damping function, it is within the protection scope of the present application.

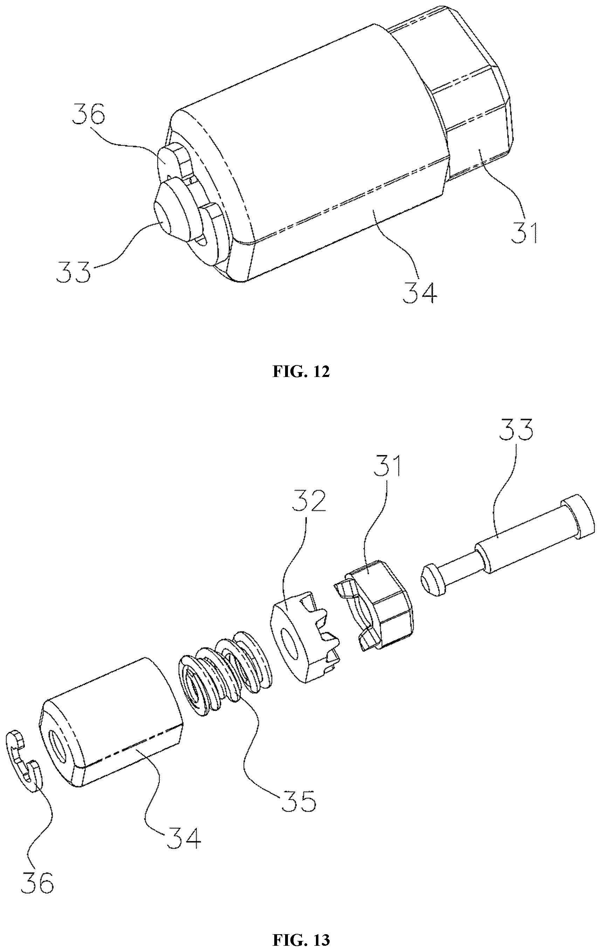

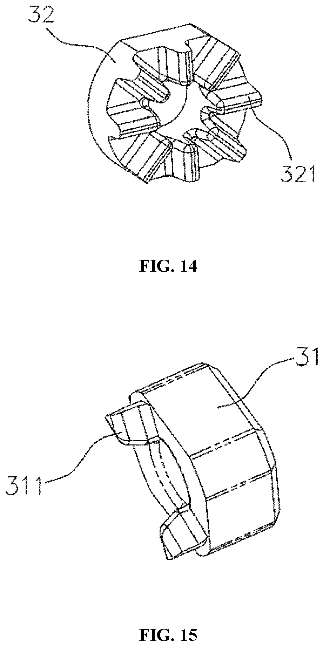

FIG. 12 is a view illustrating the structure of a rotation shaft of a foldable screen according to embodiments of the present application. FIG. 13 is an exploded view of a rotation shaft of a foldable screen according to embodiments of the present application. FIG. 14 is a view illustrating the structure of a concave teeth member of a foldable screen according to embodiments of the present application. FIG. 15 is a view illustrating the structure of a convex teeth member of a foldable screen according to embodiments of the present application. Referring to FIGS. 12 to 15, in this embodiment of the present application, the rotation shaft 3 is installed between the first foldable body 21 and the second foldable body 22 so that the flexible display screen 1 can be opened and closed within an angle range of 180°. In this embodiment of the present application, the damping mechanism further includes a rotatable damping structure disposed in the rotation shaft 3. The rotatable damping mechanism is configured to provide the rotation halt damping force so that the foldable screen can be stably kept at a folded angle. The rotation halt damping force here is also greater than the resilient force provided by the resilient mechanism in the slidable mechanism 4. In this embodiment of the present application, the rotation shaft 3 having damping is configured so that a good feel experience of opening and closing the foldable screen can be provided, and at the same time, a user can be facilitated to fold the foldable screen to any angle for fixation, prevent loosening, shaking and other phenomena. In this embodiment of the present application, the rotatable damping mechanism has the same function as the slidable damping mechanism. In practical manufacturing, only one of the two needs to be provided.

Referring to FIGS. 13 to 15, in this embodiment of the present application, the rotatable damping mechanism includes a convex teeth member 31 and a concave teeth member 32. The concave teeth member 32 is installed on one of the first foldable body 21 or the second foldable body 22. The convex teeth member 31 is installed on the other one of the first foldable body 21 or the second foldable body 22. The concave teeth member 32 and the convex teeth member 31 are located on the same central axis. The concave teeth member 32 is provided with multiple concave teeth 321. The convex teeth member 31 is provided with multiple convex teeth 311. The convex teeth member 31 and the concave teeth member 32 can mesh and rotate with each other. When the convex teeth member 31 and the concave teeth member 32 rotate relative to each other, a rotation damping force is generated for the rotation of the convex teeth member 31 through the limiting action of the concave teeth 321 on the convex teeth 311. In this embodiment of the present application, different concave teeth 321 on the concave teeth member 32 can implement the stop positions of the convex teeth member 31 at different angles. In this embodiment of the present application, the concave teeth member 32 is provided with eight concave teeth 321, and the convex teeth member 31 is provided with two convex teeth 311 to simplify the part structures and improve the folding stability. In other embodiments, the number of the concave teeth 321 and the number of the convex teeth 311 may be configured according to needs and are not limited by this embodiment of the present application.

As shown in FIG. 13, in this embodiment of the present application, the rotation shaft 3 further includes a fixed shaft 33, a fixed sleeve 34, a push spring 35 and a circlip 36. The fixed sleeve 34 is installed in the first foldable body 21 or the second foldable body 22. The concave teeth member 32 is sleeved in the fixed sleeve 34. The fixed shaft 33 is sequentially threaded through the convex teeth member 31, the concave teeth member 32 and the fixed sleeve 34. The push spring 35 is sleeved on the fixed shaft 33 and abuts between the fixed sleeve 34 and the concave teeth member 32. One end of the fixed shaft 33 is engaged with the convex teeth member 31, and the other end of the fixed shaft 33 is engaged with the fixed sleeve 34 through the circlip 36. In this embodiment of the present application, the push spring 35 fixedly connects the concave teeth member 32 to the convex teeth member 31, effectively ensuring the operation reliability of the rotatable damping mechanism and preventing a failure of the rotation shaft 3 caused by the separation between the concave teeth member 32 and the convex teeth member 31.

As shown in FIGS. 3 to 5, in this embodiment of the present application, the foldable screen further includes a deformable pad 6 disposed in the foldable region (that is, the vicinity of the rotation shaft 3) of the flexible display screen 1. The deformable pad 6 is configured to support and protect the foldable region of the flexible display screen 1. In this embodiment of the present application, the deformable pad 6 is a silicone pad having better flexibility, better high temperature resistance and better wear resistance. In the process of unfolding the foldable screen, the silicone pad can fill the gap between the slidable member 212 and the rotation shaft 3 through its resilient deformation so that the flexible display screen 1 can be effectively supported and protected, thus improving the structure strength of the foldable screen, ameliorating the aesthetics of the foldable screen and improving the service life of the product.

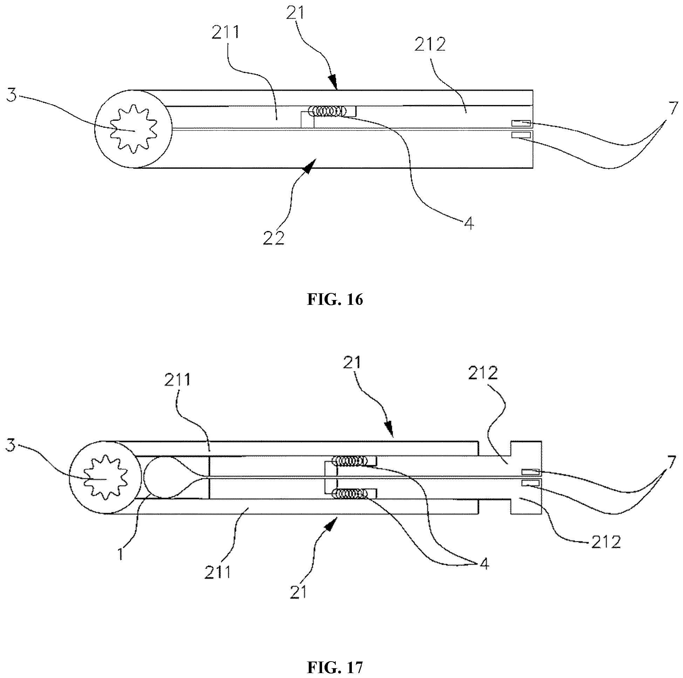

FIG. 16 is a view illustrating the structure of a foldable screen having a locking mechanism according to embodiments of the present application. Referring to FIG. 16, in this embodiment of the present application, the foldable screen further includes a locking mechanism 7 disposed between the first foldable body 21 and the second foldable body 22. The locking mechanism 7 is configured to lock the flexible display screen 1 in the folded state. In this embodiment of the present application, the locking mechanism 7 is configured so that the stability of the foldable screen can be increased in the folded state, the foldable screen can be prevented from loosening caused by an unstable folding, the continuous unfolding force applied to the foldable screen can be reduced, and the service life of the foldable screen can be improved. In this embodiment of the present application, the locking mechanism 7 may be a snap structure, a permanent-magnet structure or an electromagnet structure. In this embodiment of the present application, the locking mechanism 7 includes two permanent magnets disposed at the end positions of opposite sides of the first foldable body 21 and the second foldable body 22. The first foldable 21 and the second foldable body 22 can be secured to each other under the magnetic action of the preceding permanent magnets.

In this embodiment of the present application, the slidable mechanism 4 may be disposed on the first foldable body 21 and the second foldable body 22 separately so that when the first foldable body 21 rotates relative to the second foldable body 22, the flexible display screen 1 can simultaneously slide relative to the first foldable body 21 and the second foldable body 22, improving the folding efficiency.

The structures shown in FIGS. 2 to 6 in this embodiment of the present application are illustrated by using the foldable screen in the forms of a single foldable screen and outward folding as an example. In practice, the preceding structures according to this embodiment of the present application may be also applied to devices having double foldable screens or multiple foldable screens. Similarly, the preceding structures can be used not only for the form of an outward foldable screen (that is, in the folded state, the flexible display screen 1 is located outside of the foldable bodies), but also for the form of an inward foldable screen (that is, in the folded state, the flexible display screen 1 is located inside of the foldable bodies). Exemplarily, FIG. 17 is a view illustrating the structure of a foldable screen for an inward foldable screen according to embodiments of the present application. Referring to FIG. 17, the foldable screen includes two first foldable bodys 21 that are rotatably connected to each other through the rotation shaft 3. The two first foldable bodys 21 each include a fixed member 211 and a slidable member 212 that are slidably connected to each other through the slidable mechanism 4. When the foldable screen is switched from the unfolded state to the folded state, two slidable members 212 simultaneously slide in the direction away from the rotation shaft 3 so that a space is formed inside the two first foldable bodys 21 to accommodate the inner foldable region of the flexible display screen 1. When the foldable screen is switched from the folded state to the unfolded state, the two slidable members 212 simultaneously slide in the direction towards the rotation shaft 3 so that the two first foldable bodys 21 and the rotation shaft 3 support the foldable region of the flexible display screen 1, effectively protecting the flexible display screen 1.

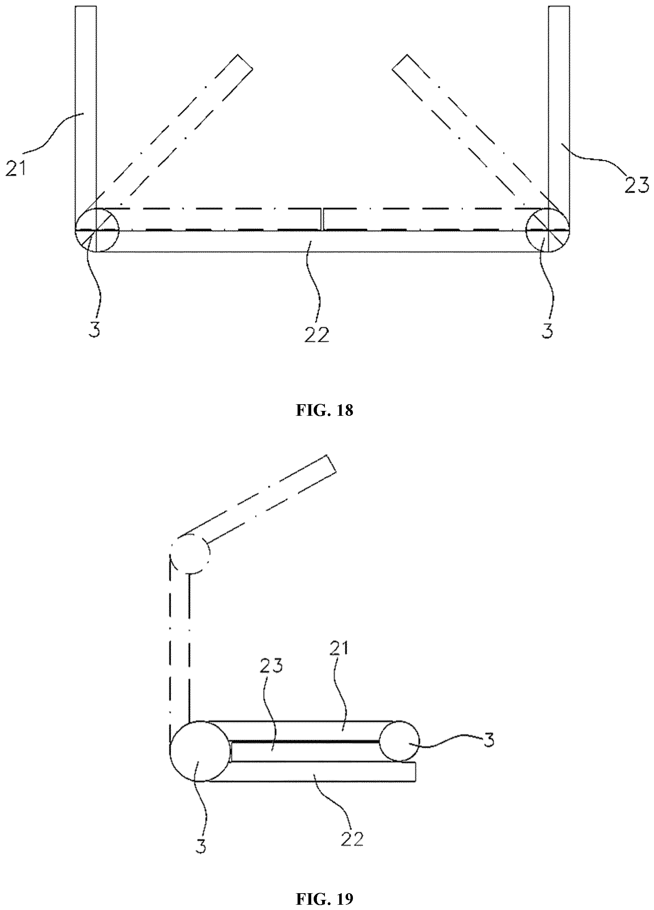

FIG. 18 is a view illustrating the structure of a foldable screen for a double foldable screen according to embodiments of the present application. FIG. 19 is a view illustrating the structure of another foldable screen for a double foldable screen according to embodiments of the present application. Referring to FIG. 18, the foldable screen includes a first foldable body 21, a second foldable body 22 and a third foldable body 23 that are sequentially rotatably connected through the rotation shaft 3. The second foldable body 22 is a fixed foldable body. The first foldable body 21 and the third foldable body 23 are both slidable foldable bodies. The first foldable body 21 and the third foldable body 23 are selectively folded by the two sides of the second foldable body 22. While the first foldable body 21 and the third foldable body 23 are rotating relative to the second foldable body 22, the slidable mechanisms in the first foldable body 21 and the third foldable body 23 can drive the flexible display screen to slide synchronously, thus adapting to the changes in the outer side lengths of corresponding foldable bodies.

Referring to FIG. 19, the foldable screen includes a second foldable body 22, a first foldable body 21 and a third foldable body 23 that are sequentially rotatably connected through the rotation shaft 3. The second foldable body 22 is a fixed foldable body. The first foldable body 21 and the third foldable body 23 are both slidable foldable bodies. When being folded, the third foldable body 23 is folded relative to the first foldable body 21 and then is driven by the first foldable body 21 to be simultaneously folded relative to the second foldable body 22, thus completing the whole folding process. While the third foldable body 23 is rotating relative to the first foldable body 21 or the first foldable body 21 is rotating relative to the second foldable body 22, the slidable mechanisms disposed inside the third foldable body 23 and the first foldable body 21 can drive the flexible display screen to synchronously slide, thus adapting to the changes in the outer side lengths of corresponding foldable bodies.

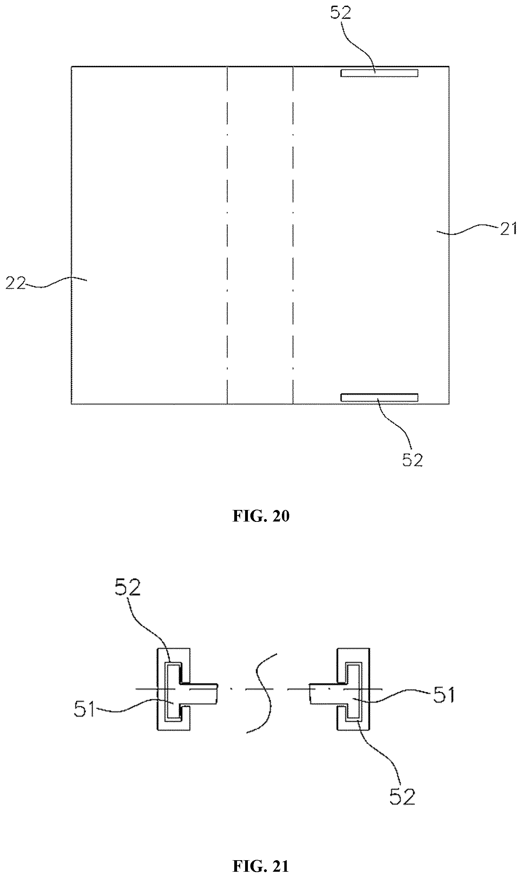

In another optional embodiment of the present application, the slidable mechanism 4 may also use the structure of a roller and a rolling groove for sliding the flexible display screen. FIG. 20 is a view illustrating the structure of a foldable screen having a roller and a rolling groove according to embodiments of the present application. FIG. 21 is a view illustrating the structure of a roller and a rolling groove according to embodiments of the present application. Referring to FIGS. 20 and 21, in this embodiment of the present application, the slidable mechanism 4 includes a roller 51 and a rolling groove 52. Two rollers 51 are provided and are located on two sides of the slidable member 212. Two rolling grooves 52 are also provided and are located on two sides of the fixed member 211. One of the two rollers 51 is slidably connected to a respective rolling groove 51. In this embodiment of the present application, the rollers are configured to slide in the rolling grooves 52, thus driving the slidable member 212 to slide relative to the fixed member 211. The slidable mechanism 4 is simple in structure and easy in implementation, ensuring the sliding stability of the slidable mechanism 212 and prolonging the service life of the foldable screen. In other cases, the slidable mechanism 4 may be a structure of a slider and a sliding groove that are in sliding fit or other mechanisms for linear sliding. This embodiment of the present application does not enumerate the examples one by one.

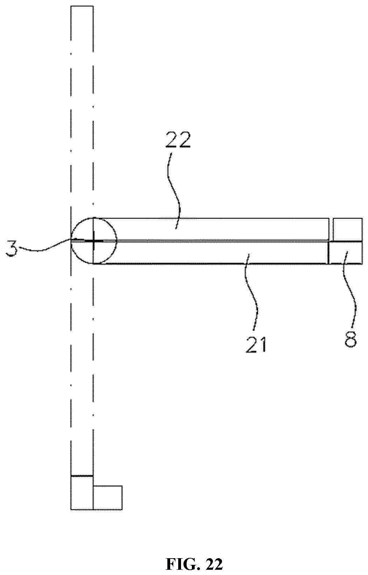

In another optional embodiment of the present application, the slidable mechanism 4 may also slide the flexible display screen 1 by a screen retractable space 8 disposed on the first foldable body 21 and/or the second foldable body 22. FIG. 22 is a view illustrating the structure of a foldable screen having a screen retractable space according to embodiments of the present application. Referring to FIG. 22, in this embodiment of the present application, the slidable mechanism 4 includes a screen retractable space 8 disposed at the edge of the first foldable body 21. While the first foldable body 21 is rotating relative to the second foldable body 22, the flexible display screen 1 can slide along the first foldable body 21, and the protruding portion of the flexible display screen 1 relative to the first foldable body 21 slides into the screen retractable space 8, thus effectively supporting and protecting the flexible display screen.

In this embodiment of the present application, the slidable mechanism 4 further includes an oblique guidance mechanism connected to the flexible display screen 1. The oblique guidance mechanism is configured to enable the end of the flexible display screen 1 to slide into the screen retractable space 8 along the oblique direction. The screen retractable space 8 of this embodiment of the present application is additionally disposed at the outer end of the first foldable body 21, occupying a certain space of the display device, so in practical manufacturing, the screen retractable space 8 may also serve as the space for the antenna and rear camera of the device.

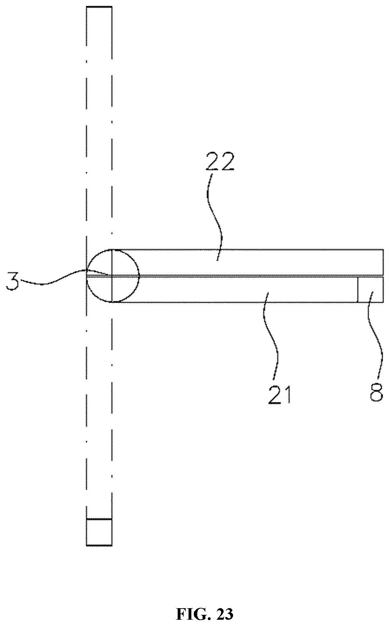

In another optional embodiment of the present application, the slidable mechanism 4 may be provided with a winding mechanism instead of an oblique guidance mechanism. FIG. 23 is a view illustrating the structure of another foldable screen having a screen retractable space according to embodiments of the present application. Referring to FIG. 23, in this embodiment of the present application, the screen retractable space 8 is disposed inside the first foldable body without increasing the length of the first foldable body 21, thus not additionally occupying the space of the device. Moreover, in this embodiment of the present application, the slidable mechanism further includes a winding mechanism connected to the flexible display screen 1. The winding mechanism is configured to wind the end of the flexible display screen 1 into the screen retractable space 8. In this embodiment of the present application, while the first foldable body 21 is rotating relative to the second foldable body 22, the flexible display screen slides along the first foldable body 21, and the protruding portion of the flexible display screen relative to the first foldable body 21 is wound to hide in the screen retractable space through the winding mechanism. This embodiment of the present application can not only support and protect the flexible display screen, but can also effectively save the space of the display device.

Embodiments of the present application further provide a foldable display terminal including the preceding foldable screen. The foldable display terminal may be a foldable mobile phone, a foldable tablet computer, a foldable display device or other devices. The foldable screen of the foldable display terminal is simple in structure, easy in implementation, high in strength, aesthetic in appearance and has a long service life.

## Claims

1. A foldable screen, comprising:
a flexible display screen (1), a first foldable body (21) and a second foldable body (22), wherein the first foldable body (21) and the second foldable body (22)are configured to support the flexible display screen (1);
a rotation shaft (3), wherein the rotation shaft (3) is disposed between the first foldable body (21) and the second foldable body (22) and is configured to enable the first foldable body (21) and the second foldable body (22) to rotate relative to each other; and
a slidable mechanism (4), wherein the slidable mechanism (4) is disposed on at least one of the first foldable body (21) or the second foldable body (22) and configured to enable the flexible display screen (1) to slide relative to the first foldable body (21) and the second foldable body (22) when the first foldable body (21) rotates relative to the second foldable body (22).

2. The foldable screen according to claim 1, wherein the first foldable body (21) comprises a fixed member (211) and a slidable member (212), the fixed member (211) is connected to the rotation shaft (3), the slidable member (212) is connected to a non-foldable region of the flexible display screen (1), and the slidable member (212) and the fixed member (211) are connected through the slidable mechanism (4).

3. The foldable screen according to claim 2, wherein the slidable mechanism (4) comprises a slidable shaft (42) and a slide seat (41), the slidable shaft (42) is disposed on the slidable member (212), and the slide seat (41) is disposed on the fixed member (211).

4. The foldable screen according to claim 2, wherein the slidable mechanism (4) comprises a roller (51) and a rolling groove (52), the roller (51) is disposed on the slidable member (212), and the rolling groove (52) is disposed on the fixed member (211).

5. The foldable screen according to claim 1, wherein the slidable mechanism (4) comprises a screen retractable space disposed at least one of an edge of the first foldable body (21) or an edge of the second foldable body (22).

6. The foldable screen according to claim 5, wherein the slidable mechanism (4) further comprises an oblique guidance mechanism, and the oblique guidance mechanism is connected to the flexible display screen (1) and is configured to enable an end of the flexible display screen (1) to obliquely slide into the screen retractable space (8).

7. The foldable screen according to claim 5, wherein the slidable mechanism (4) further comprises a winding mechanism, and the winding mechanism is connected to the flexible display screen (1) and is configured to wind an end of the flexible display screen (1) into the screen retractable space (8).

8. The foldable screen according to claim 3, wherein the slidable mechanism (4) further comprises a resilient mechanism, and the resilient mechanism is configured to pull the slidable shaft (42) to drive the slidable shaft (42) move relative to the slide seat (41) to flatten the flexible display screen (1).

9. The foldable screen according to claim 8, further comprising a damping mechanism, wherein the damping mechanism is disposed on at least one of the rotation shaft (3) or the slidable mechanism (4) and is configured to provide a halt damping force for unfolding the foldable screen; and
wherein the halt damping force is greater than a resilient force provided by the resilient mechanism.

10. The foldable screen according to any one of claims 1 to 9, further comprising a deformable pad (6), wherein the deformable pad (6) is disposed in a foldable region of the flexible display screen (1) and is configured to support and protect the foldable region of the flexible display screen (1).

11. The foldable screen according to any one of claims 1 to 9, further comprising a locking mechanism (7), wherein the locking mechanism (7) is disposed between the first foldable body (21) and the second foldable body (22) and is configured to lock the flexible display screen (1) in a folded state.

12. A foldable display terminal, comprising the foldable screen according to any one of claims 1 to 11.
